# EUROPEAN PATENT SPECIFICATION

(11) **EP 4 292 438 B1**
(45) Date of publication and mention of the grant of the patent: **03.06.2026**
(21) Application number: 22752655.5
(22) Date of filing: 02.02.2022
(51) Int. Cl.: A23J 3/00, A23L 13/00, A23L 15/00, A23L 17/00, A23J 3/22, A23L 13/60, A23P 30/20, A23P 30/25, A23J 3/26, A23J 3/04, A23J 3/14, A23J 3/28, A23J 3/16

(54) **PRODUCTION METHOD FOR PROTEIN PROCESSED FOOD AND PRODUCTION DEVICE FOR PROTEIN PROCESSED FOOD**
HERSTELLUNGSVERFAHREN FÜR PROTEINVERARBEITETES NAHRUNGSMITTEL UND HERSTELLUNGSVORRICHTUNG FÜR PROTEINVERARBEITETES NAHRUNGSMITTEL
PROCÉDÉ DE PRODUCTION D'ALIMENT TRANSFORMÉ PROTÉINÉ ET DISPOSITIF DE PRODUCTION D'ALIMENT TRANSFORMÉ PROTÉINÉ

(30) Priority: 10.02.2021 JP 2021020080
(43) Date of publication of application: 20.12.2023
(73) Proprietor: Nissui Corporation, Tokyo 105-8676 (JP)
(72) Inventor: YOSHITOMI, Bunji, Hachioji-shi, Tokyo 192-0991 (JP)
(74) Representative: Mewburn Ellis LLP
(86) International application number: PCT/JP2022/004090
(87) International publication number: WO 2022/172828

(56) References cited:
- EP-A1- 2 636 314
- JP-A- H0 479 862
- JP-A- S51 110 067
- JP-A- S6 251 968
- JP-A- S61 132 160
- JP-A- S61 132 160
- JP-U- S5 662 095
- JP-U- S62 153 888
- US-A- 4 978 551

## Description

### Technical Field

The present disclosure relates to a production method for a protein processed food, which is subjected to heating and molding and contains a protein of livestock meat, chicken meat, seafood, eggs, vegetable, or the like as a primary raw material, employing a method of continuously heating a material to be heated by an internal heating system, and a production device for a protein processed food.

### Background Art

Japanese Patent No. 5113934 discloses a technique in which a heating tubular body itself through which an object to be heated passes is rotated with a center line in a length direction of the tubular body as a rotation axis to uniformly heat the object to be heated in the tubular body. This document discloses the production of a protein processed food having a shape in which another mixture penetrates through a center part.

Japanese Patent No. 5727412 discloses a technique of continuously producing a food obtained by further combining different materials with heat-processed product of a mixture containing livestock meat or seafood-derived meat as a main raw material, and drawing a pattern on a cross-section of the food with the different materials, such as Kintaroame.

EP2636314A1 discloses a method for producing a processed protein food by thermally coagulating and molding a fluid mixture containing a protein, a lipid, and water continuously by an internal heating system while moving the mixture in a tube, wherein the tubular body has an outlet for the protein processed food at one end, the mixture is extruded toward the outlet, the mixture is internally heated and coagulated at a side further upstream than the outlet.

JPS61132160A discloses a method of hollow molding of meat, by forming a kneaded meat into a kneaded wire containing a string at the center with a double nozzle type continuous molding machine and introduces it into a heating machine. After heat-coagulation, a hollow meat product is obtained. US4978551A discloses a protein processed food, obtained by continuously heat-coagulating a mixture containing a protein, a lipid, and moisture, having fluidity, and having a gel stiffness of 230 g/cm.

### SUMMARY OF INVENTION

### Technical Problem

However, some of the protein processed foods produced in the above-described conventional examples are solid, and no consideration is given to the production of hollow protein processed foods.

An object of the disclosure is to make it possible to continuously produce a heat-coagulating protein processed food in a hollow shape.

### Solution to Problem

A production method for a protein processed food according to a first aspect includes continuously heat-coagulating and molding a fluid mixture containing a heat-coagulating protein, a lipid, and moisture, by an internal heating system while moving the mixture in a tubular body, wherein the tubular body has an outlet for a production method at one end, and a core material arranged inside the tubular body and extending to at least the outlet along an axial direction of the tubular body, and wherein the mixture is supplied between the tubular body and the core material while the core material is rotated around the axial direction of the tubular body, the mixture is extruded toward the outlet, the mixture is internally heated and coagulated at a side further upstream side than the outlet, and the coagulated hollow protein processed food is discharged from the outlet.

In the production method for a protein processed food, a fluid mixture containing a protein, a lipid, and moisture is supplied between the tubular body and the core material while the core material is rotated around the axial direction of the tubular body, the mixture is extruded toward the outlet, and at a side further upstream than the outlet, the mixture is internally heated and coagulated, and the coagulated hollow protein processed food is discharged from the outlet. Adhesion of the mixture to the core material is suppressed by rotating the core material, so that smooth extrusion can be performed. As a result, a gap is formed between an outer surface of the core material and the mixture. A gap is also formed between an inner surface of the tubular body and the mixture. Steam is generated at the time of internal heating of the mixture, but the steam is discharged to the outside of the tubular body by these gaps serving as passages for the steam. Therefore, as compared with the case of producing a solid protein processed food without a core material, the steam can be easily dissipated, and an increase in internal pressure inside the tubular body is suppressed. Therefore, continuous discharge of the protein processed food which is hollow can be stably performed.

The tubular body and a core material arranged inside the tubular body and extending to at least the outlet along an axial direction of the tubular body can be installed at any inclination from horizontal to vertical. At this time, in a case in which the outlet is installed at a position higher than the inlet in the vertical direction, a back pressure is generated, and continuous discharge of the protein processed food which is hollow can be stably performed.

According to a second aspect, in the production method for a protein processed food according to the first aspect, the tubular body and the core material are disposed such that respective axial directions of the tubular body and the core material are a horizontal direction or a vertical direction.

In a case in which the tubular body and the core material arranged inside the tubular body and extending to at least the outlet along an axial direction of the tubular body are in the vertical direction, by setting a discharge direction of the mixture from the lower side to the upper side, the mixture is prevented from falling in the direction of gravity and/or the steam is discharged upward at the time of internal heating of the mixture, so that continuous discharge of the protein processed food which is hollow can be stably performed.

According to a third aspect, in the production method for a protein processed food according to the first aspect, the tubular body and the core material are disposed such that respective axial directions of the tubular body and the core material are a horizontal direction, the core material is rotatably supported at a side further upstream than the outlet and is not supported at the outlet, and a specific gravity of the core material is equivalent to a specific gravity of the mixture.

In a case in which the tubular body and the core material are disposed such that respective axial directions of the tubular body and the core material are a horizontal direction, the core material is rotatably supported at a side further upstream than the outlet and is not supported at the outlet, so that continuous discharge of the protein processed food which is hollow can be performed. However, in this case, since particularly the tip end side (outlet side) of the core material bends downward by its own weight, it is a problem to suppress the bending of the core material.

In the production method for a protein processed food, since the specific gravity of the core material is equivalent to the specific gravity of the mixture, deflection of the core material can be suppressed, and the center of the core material at the outlet of the tubular body can be matched with or brought close to a desired position. Therefore, the protein processed food which is hollow can be produced in a desired shape.

According to a fourth aspect, in the production method for a protein processed food according to any one of the first to third aspects, a vertical cutting portion rotatably supporting the core material and configured to vertically cut the protein processed food is provided near the outlet of the tubular body, and the protein processed food is heat-molded while the core material is rotatably supported by the vertical cutting portion, and the protein processed food is vertically cut at the outlet.

In the production method for a protein processed food, the vertical cutting portion rotatably supporting the core material is provided near the outlet of the tubular body. Since the tip end side (outlet side) of the core material is supported by the vertical cutting portion, it is suppressed that particularly the tip end side (outlet side) of the core material bends downward by its own weight.

The protein processed food discharged from the outlet is vertically cut by the vertical cutting portion. As a result, the protein processed food in which the hollow structure is cut into two pieces can be continuously produced.

According to a fifth aspect, in the production method for a protein processed food according to any one of the first to fourth aspects, further including coloring of an outer surface of the mixture.

In the production method for a protein processed food, coloring of the outer surface of the mixture is performed, so that a hollow protein processed food like, for example, a cuttlefish imitation can be produced.

A production device for a protein processed food according to a sixth aspect continuously heat-coagulates and molds a fluid mixture containing a heat-coagulating protein, a lipid, and moisture, by an internal heating system while moving the mixture in a tubular body, the production device including the tubular body, having an inlet to which the mixture is supplied and an outlet which is provided at one end and from which the protein processed food is discharged; a core material arranged inside the tubular body, extending to at least the outlet along an axial direction of the tubular body, and rotating around the axial direction; and an internal heating device provided at a position at a side further upstream than the outlet of the tubular body, in which during a process in which the mixture is supplied, from the inlet, between the tubular body and the core material and is extruded toward the outlet, the mixture is heated and coagulated by the internal heating device to obtain the protein processed food, which is hollow.

In the production device for a protein processed food, a fluid mixture containing a protein, a lipid, and moisture is supplied between the tubular body and the core material while the core material is rotated around the axial direction of the tubular body, the mixture is extruded toward the outlet, and at a side further upstream than the outlet, the mixture is internally heated and coagulated by an internal heating device, and the coagulated hollow protein processed food is discharged from the outlet. At this time, the mixture is extruded toward the outlet while the core material is rotated and adhesion of the mixture to the core material is suppressed, so that smooth extrusion can be performed. As a result, a gap is formed between an outer surface of the core material and the mixture. A gap is also formed between an inner surface of the tubular body and the mixture. Steam is generated at the time of internal heating of the mixture, but the steam is discharged to the outside of the tubular body by these gaps serving as passages for the steam. Therefore, as compared with the case of producing a solid protein processed food without a core material, the steam can be easily dissipated, and an increase in internal pressure inside the tubular body is suppressed. Therefore, continuous discharge of the protein processed food, which is hollow, can be stably performed.

The tubular body and a core material arranged inside the tubular body and extending to at least the outlet along an axial direction of the tubular body can be installed at any inclination from horizontal to vertical. At this time, in a case in which the outlet is installed at a position higher than the inlet in the vertical direction, a back pressure is generated, and continuous discharge of the protein processed food which is hollow can be stably performed.

According to a seventh aspect, in the production device for a protein processed food according to the sixth aspect, the tubular body and the core material are disposed such that respective axial directions of the tubular body and the core material are a horizontal direction or a vertical direction.

In a case in which the tubular body and the core material arranged inside the tubular body and extending to at least the outlet along an axial direction of the tubular body are in the vertical direction, by setting a discharge direction of the mixture from the lower side to the upper side, the mixture is prevented from falling in the direction of gravity and/or the steam is discharged upward at the time of internal heating of the mixture, so that continuous discharge of the protein processed food which is hollow can be stably performed.

According to an eighth aspect, in the production device for a protein processed food according to the sixth aspect, the tubular body and the core material are disposed such that respective axial directions of the tubular body and the core material are a horizontal direction, the core material is rotatably supported at a side further upstream than the outlet and is not supported at the outlet, and a specific gravity of the core material is equivalent to a specific gravity of the mixture.

In a case in which the tubular body and the core material are disposed such that respective axial directions of the tubular body and the core material are a horizontal direction, the core material is rotatably supported at a side further upstream than the outlet and is not supported at the outlet, so that continuous discharge of the protein processed food which is hollow can be performed. However, in this case, since particularly the tip end side (outlet side) of the core material bends downward by its own weight, it is a problem to suppress the bending of the core material.

In the production device for a protein processed food, since the specific gravity of the core material is equivalent to the specific gravity of the mixture, the core material is in a floating state in the mixture, and deflection of the core material is suppressed. As a result, the center of the core material at the outlet of the tubular body coincides with or approaches a desired position. Therefore, the protein processed food which is hollow can be produced in a desired shape.

According to a ninth aspect, in the production device for a protein processed food according to any one of the sixth to eighth aspects, a vertical cutting portion rotatably supporting the core material and configured to vertically cut the protein processed food is provided near the outlet of the tubular body.

In the production device for a protein processed food, the tubular body and the core material are disposed such that respective axial directions of the tubular body and the core material are a horizontal direction, and the core material is rotatably supported by the vertical cutting portion near the outlet of the tubular body. Since the tip end side (outlet side) of the core material is supported by the vertical cutting portion, it is suppressed that particularly the tip end side (outlet side) of the core material bends downward by its own weight.

The protein processed food discharged from the outlet is vertically cut by the vertical cutting portion. As a result, the protein processed food in which the hollow structure is cut into two pieces can be continuously produced.

According to a tenth aspect, in the production device for a protein processed food according to any one of the sixth to ninth aspects, the tubular body has a colorant supply port through which a colorant for coloring an outer surface of the mixture is supplied.

In the production device for a protein processed food, a colorant is supplied from the colorant supply port provided in the tubular body and coloring of the outer surface of the mixture is performed, so that a hollow protein processed food like, for example, a cuttlefish imitation can be produced.

Also disclosed but not forming part of the claimed invention is a protein processed food according to an eleventh aspect obtained by continuously and hollowly heat-coagulating a mixture containing a protein, a lipid, and moisture, having fluidity, and having a gel stiffness of from 180 g/cm to 370 g/cm.

The gel stiffness of the mixture is measured by the following procedure. The mixture before heating is filled into a vinylidene chloride tube, subjected to a heating treatment in a boiling tank at 90°C for 40 minutes, then rapidly cooled in ice water, and left at 10°C overnight, and then physical properties are measured. In the measurement, in order to measure gel stiffness (g/cm) as an index of gel physical properties with a φ5-mm spherical plunger using Rheo TEX SD-700 manufactured by Sun Scientific Co., Ltd., breaking strength (g) and breaking strain (cm) are measured.

The protein processed food can obtain a viscoelastic texture and a texture unique to a hollow structure.

### Advantageous Effects of Invention

According to the disclosure, a heat-coagulating protein processed food can be continuously produced in a hollow shape.

### BRIEF DESCRIPTION OF DRAWINGS

Fig. 1 is a cross-sectional view schematically illustrating a production method and device for a protein processed food according to a first embodiment.
Fig. 2 is a cross-sectional view illustrating a tubular body and a core material.
Fig. 3 is a perspective view schematically illustrating a state in which steam is discharged through a gap between the tubular body and a mixture and a gap between an outer surface of the core material and the mixture.
Fig. 4 is a perspective view illustrating a state in which a cuttlefish imitation as a protein processed food is discharged from an outlet.
Fig. 5 is a cross-sectional view schematically illustrating a production method and device for a protein processed food according to Modification 1.
Fig. 6 is a perspective view illustrating an example in which a vertical cutting portion is provided near the outlet of the tubular body.
Fig. 7 is a perspective view illustrating a protein processed food cut into two pieces by the vertical cutting portion.
Fig. 8 is a cross-sectional view schematically illustrating a production method and device for a protein processed food according to Modification 2.
Fig. 9 is a cross-sectional view schematically illustrating a production method and device for a protein processed food according to a second embodiment.

### DESCRIPTION OF EMBODIMENTS

Hereinafter, modes for carrying out the disclosure will be described with reference to the drawings. In the drawings, components denoted by the same reference numerals mean the same or similar components. Overlapping descriptions and reference numerals in the embodiments described below may be omitted. The drawings used in the following description are all schematic, and dimensional relationships of respective elements, ratios of respective elements, and the like illustrated in the drawings do not necessarily coincide with actual ones. Dimensional relationships of the respective elements, ratios of the respective elements, and the like do not necessarily coincide among a plurality of drawings.

### [First Embodiment]

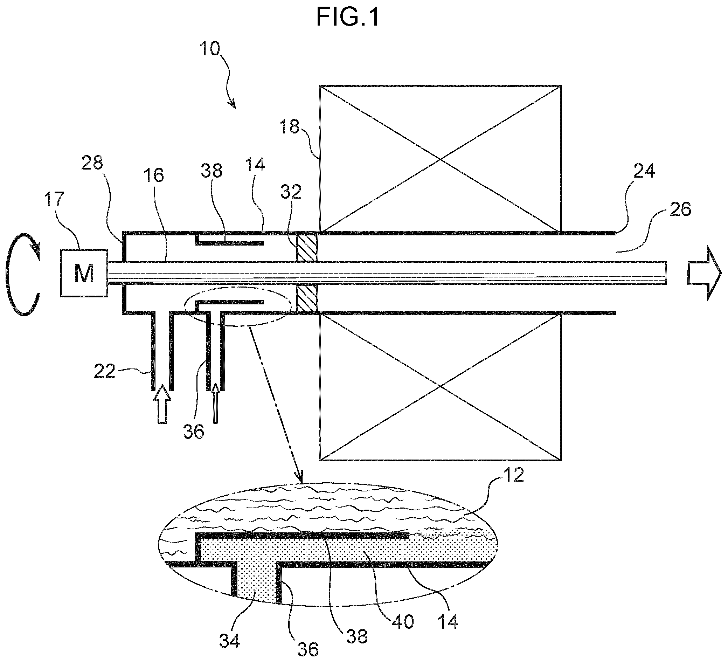

In Fig. 1, a production device 10 for a protein processed food according to the present embodiment is a device that continuously heat-coagulates and molds a fluid mixture 12 containing a heat-coagulating protein, a lipid, and moisture, by an internal heating system while moving the mixture 12 in a tubular body 14. This device can continuously heat-mold a food, for example, having a chikuwa-like shape or a cuttlefish-like shape.

The gel stiffness of the mixture 12 is, for example, from 180 g/cm to 370 g/cm. As the protein contained in the mixture 12, in addition to a protein having heat coagulability, for example, an animal protein of livestock meat, fish meat, or eggs, a vegetable protein can be used.

The production device 10 for a protein processed food according to the present embodiment includes the tubular body 14, a core material 16, and an internal heating device 18. In the present embodiment, the tubular body 14 and the core material 16 are disposed such that respective axial directions of the tubular body 14 and the core material 16 are a horizontal direction. The horizontal direction refers to a range of the horizontal direction ± 10°. A positive angle means that an outlet 26 described below is at a position higher than an inlet 22. A negative angle means that the outlet 26 described below is at a position lower than the inlet 22. It is preferable that the outlet is disposed at a positive angle rather than at a negative angle with respect to the inlet because the discharge can be stably performed. The internal heating device 18 is, for example, a microwave heating device provided at a position at a side further upstream than the outlet 26 of the tubular body 14.

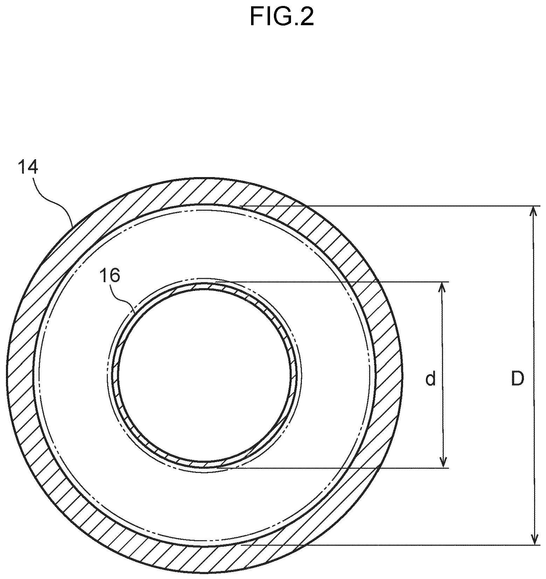

The tubular body 14 has the inlet 22 to which the mixture 12 is supplied and the outlet 26 which is provided at one end 24 and from which a protein processed food 30 is discharged. As also illustrated in Fig. 2, the tubular body 14 is formed in, for example, a cylindrical shape. The inlet 22 is provided, for example, near the other end 28 of the tubular body 14. The other end 28 is located on a side opposite to the one end 24 in the axial direction of the tubular body 14 and is closed. The outlet 26 is open in a circular shape toward the outside in the axial direction at the one end 24 of the tubular body 14. Inside the tubular body 14, for example, a support portion 32 of the core material 16 is provided near the upstream side of the internal heating device 18. The support portion 32 is configured to allow the mixture 12 to pass in the axial direction of the tubular body 14.

The tubular body 14 has a colorant supply port 36 through which a colorant 34 for coloring an outer surface of the mixture 12 is supplied. The colorant 34 is edible. In a case in which the protein processed food 30 is a cuttlefish imitation, a color similar to cuttlefish is used as the colorant 34. A guide portion 38 is provided in a portion of the colorant supply port 36 in the tubular body 14. The guide portion 38 is a tube having an outer diameter smaller than the inner diameter of the tubular body 14 and attached coaxially with the tubular body 14. The guide portion 38 extends downstream from the position of the colorant supply port 36 within a range not reaching the support portion 32. A supply path 40 for the colorant 34 is formed between the inner surface of the tubular body 14 and the guide portion 38. A downstream end of the supply path 40 is open in the axial direction of the tubular body 14, but an upstream end is closed. As a result, the colorant 34 is supplied between the outer surface of the mixture 12 and the tubular body 14 at a side further upstream than the support portion 32. The supply of the colorant 34 increases the slipperiness between the mixture 12 and the tubular body 14, so that an effect of suppressing the clogging of the mixture 12 is expected. By attaching the colorant 34 to the mixture 12 and then performing internal heating, the colorant 34 is brought into close contact with the mixture 12, and an effect that the protein processed food 30 can be stably colored can also be obtained.

The core material 16 is a member that is disposed inside the tubular body 14, extends to at least outlet 26 along the axial direction of the tubular body 14, and rotates around the axial direction. The core material 16 is rotationally driven around the axial direction by a drive source 17 such as a motor. The core material 16 is configured to be solid or hollow. The core material 16 penetrates from the other end 28 to the one end 24 of the tubular body 14. The core material 16 is rotatably supported by the support portion 32 such that, for example, the center of the core material 16 coincides with the center of the tubular body 14. Specifically, the core material 16 is rotatably supported by, for example, the support portion 32 at a side further upstream than the outlet 26 and is not supported at the outlet 26. That is, the tip end of the core material 16 on the outlet 26 side is a free end. Therefore, depending on the configuration of the core material 16, particularly the tip end side (outlet 26 side) bends downward by its own weight, and thus it is a problem to suppress the bending of the core material.

As a means for suppressing such deflection of the core material 16, first, it is conceivable to reduce the weight of the core material 16. In a case in which the core material 16 is too light, the core material 16 floats in the mixture 12 due to buoyancy, and thus, it is conceivable to set the specific gravity of the core material 16 to be equivalent to the specific gravity of the mixture 12.

A specific example will be given. The specific gravity of the mixture 12 slightly varies depending on the formulation, but is generally 1.14 g/cm³. The core material 16 made of aluminum has an outer diameter of 10 mm, an inner diameter of 8 mm, a length of 10 mm, and a specific gravity of 2.7 g/cm³. In the case of comparing the mass of the core material 16 with the mass of the mixture 12 of the same size, the mass of the core material 16 = 2.43 g < the mass of the mixture 12 = 2.85 g is established, and it is found that the core material 16 made of aluminum is lighter. Therefore, an appropriate weight may be added to the core material 16.

Other criteria for selecting the core material 16 include high pressure resistance and light weight as described above. In a case in which the internal heating device 18 is a microwave heating device, as a criterion for selecting the core material 16, there is microwave transparency or microwave non-transparency. A material having microwave transparency is, for example, polytetrafluoroethylene. A material having microwave non-transparency is, for example, a metal. Since a microwave absorbing material self-generates heat, the microwave absorbing material is not suitable for the material of the core material 16, but there is a possibility that the microwave absorbing material can be used as long as the microwave absorbing material is configured to reflect microwaves by plating or the like. By covering an outer peripheral surface of the core material 16 with a polytetrafluoroethylene heat-shrinkable tube or coating the outer peripheral surface with polytetrafluoroethylene, slipperiness of the mixture 12 is improved, and an effect of suppressing the clogging of the mixture 12 is expected.

In Fig. 2, when an outer shape of the core material 16 is designated as "d" and an inner diameter of the tubular body 14 is designated as "D", in a case in which the protein processed food 30 is a cuttlefish imitation, for example, "D" is 49 mm and "d" is 32 mm. In this case, the surface area facing the mixture 12 (the surface area of a portion where the two-dot chain line is drawn) is 143% as compared with a case in which the core material 16 is not provided. In a case in which the protein processed food 30 is chikuwa, for example, "D" is 23 mm and "d" is 10 mm. In this case, the surface area facing the mixture 12 is 119% as compared with a case in which the core material 16 is not provided.

In the production device 10 for a protein processed food according to the present embodiment, during a process in which the mixture 12 is supplied from the inlet 22 between the tubular body 14 and the core material 16 and is extruded toward the outlet 26, the mixture 12 is heated and coagulated by the internal heating device 18 to obtain the protein processed food 30 which is hollow.

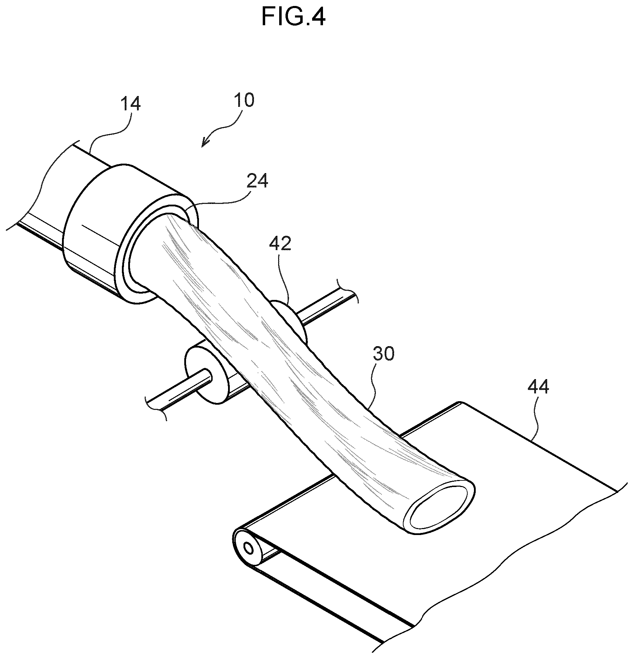

As illustrated in Fig. 4, a guide roller 42, a belt conveyor 44, or the like that conveys the protein processed food 30 may be installed at the tip of the one end 24 of the tubular body 14.

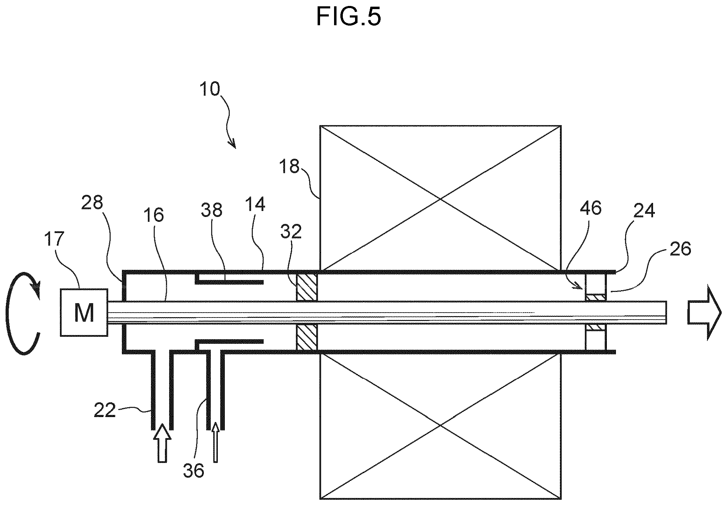

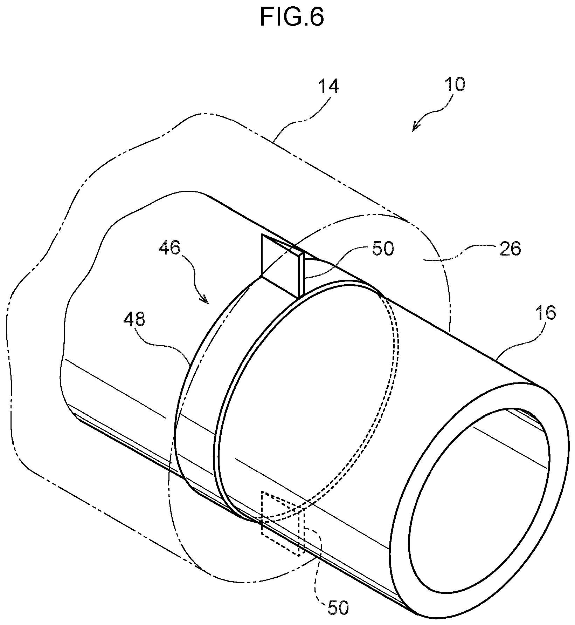

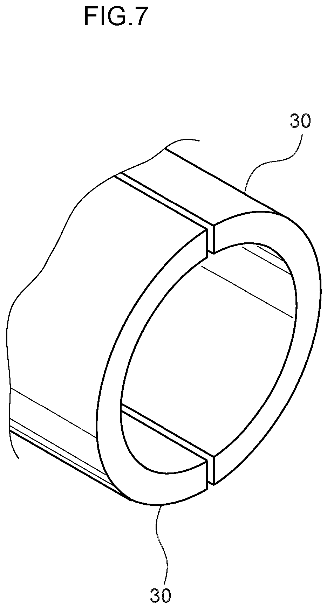

As in Modification 1 illustrated in Figs. 5 and 6, in a structure in which the tubular body 14 is disposed such that the axial direction thereof are a horizontal direction, a vertical cutting portion 46 may be provided near the outlet 26 of the tubular body 14. The vertical cutting portion 46 is configured to rotatably support the core material 16 and vertically cut the protein processed food 30. The vertical cutting portion 46 includes, for example, an annular bearing 48 and blade portions 50. The bearing 48 is held inside the tubular body 14 in relation to the blade portions 50, and rotatably supports the core material 16. The blade portions 50 are arranged, for example, in a diametrical direction at two positions between the bearing 48 and the tubular body 14. The blade edge of the blade portion 50 faces the upstream side of the tubular body 14. Thus, the protein processed food 30 can be discharged from the outlet 26 of the tubular body 14 while being vertically cut (Fig. 7).

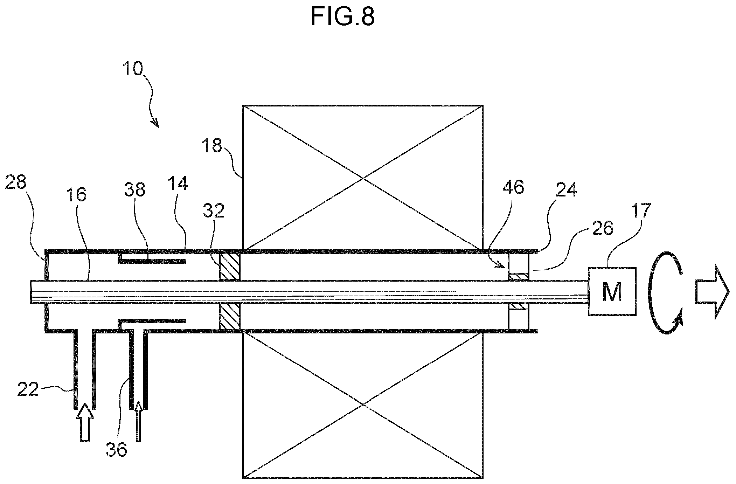

In the case of providing the vertical cutting portion 46 in this manner, as illustrated in Fig. 8, the drive source 17 of the core material 16 may be disposed at an end of the tubular body 14 on the outlet 26 side. Since the protein processed food 30 is vertically cut and discharged from the outlet 26, interference with the drive source 17 can be suppressed.

### (Operation)

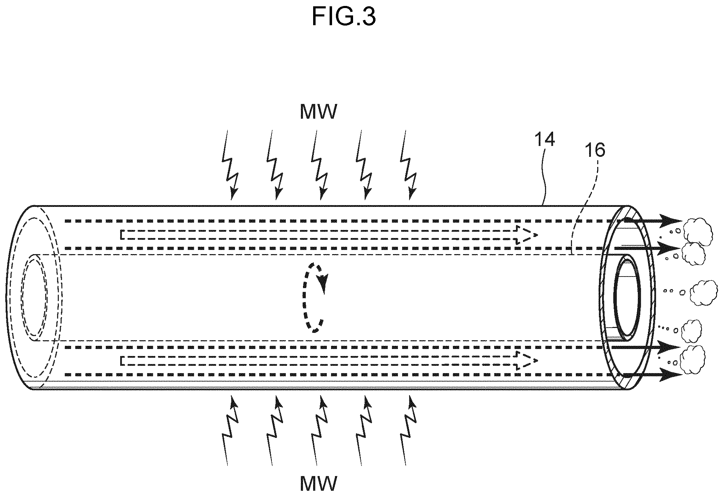

The present embodiment is configured as described above, and the operation thereof will be described below. First, the mixture 12 containing a protein, a lipid, and moisture and having fluidity is prepared (not illustrated). In Fig. 1, in the production device 10 for a protein processed food according to the present embodiment, the mixture 12 is supplied from the inlet 22 between the tubular body 14 and the core material 16 while the core material 16 is rotated around the axial direction of the tubular body 14, and the mixture 12 is extruded toward the outlet 26. At a side further upstream than the outlet 26, the mixture 12 is internally heated and coagulated by microwaves MW (Fig. 3) of the internal heating device 18, and the coagulated hollow protein processed food 30 is discharged from the outlet 26. At this time, the mixture 12 is extruded toward the outlet 26 while the core material 16 is rotated and adhesion of the mixture 12 to the core material 16 is suppressed, so that smooth extrusion can be performed. As a result, a gap is formed between an outer surface of the core material 16 and the mixture 12. A gap is also formed between an inner surface of the tubular body 14 and the mixture 12. As illustrated in Fig. 3, steam is generated at the time of internal heating of the mixture 12, but the steam is discharged to the outside of the tubular body 14 by these gaps serving as passages for the steam. Therefore, as compared with the case of producing the protein processed food 30 which is solid and does not have the core material 16, the steam can be easily dissipated, and an increase in internal pressure inside the tubular body 14 is suppressed. Therefore, continuous discharge of the protein processed food 30 which is hollow can be stably performed.

As illustrated in Fig. 1, in a case in which the tubular body 14 and the core material 16 are disposed such that respective axial directions of the tubular body 14 and the core material 16 are a horizontal direction, the core material 16 is rotatably supported by the support portion 32 at a side further upstream than the outlet 26 and is not supported at the outlet 26, so that continuous discharge of the protein processed food 30 which is hollow can be performed. However, in this case, since particularly the tip end side (outlet 26 side) of the core material 16 bends downward by its own weight, it is a problem to suppress the bending of the core material.

Since the specific gravity of the core material 16 is equivalent to the specific gravity of the mixture 12, the core material 16 is in a floating state in the mixture 12, and deflection of the core material 16 is suppressed. As a result, the center of the core material 16 at the outlet 26 of the tubular body 14 coincides with or approaches a desired position. Therefore, the protein processed food 30 which is hollow can be produced in a desired shape. By making the center of the core material 16 coincide with the center of the tubular body 14, it is possible to suppress eccentricity of the hollow portion of the protein processed food 30.

The colorant 34 is supplied from the colorant supply port 36 provided in the tubular body 14 and coloring of the outer surface of the mixture 12 is performed, so that the protein processed food 30 which is hollow, like, for example, a cuttlefish imitation can be produced.

As described above, according to the present embodiment, the protein processed food 30 having heat coagulability can be continuously produced in a hollow shape. With the protein processed food 30, a viscoelastic texture and a texture unique to a hollow structure can be obtained.

As illustrated in Fig. 4, the protein processed food 30 discharged from the tubular body 14 is conveyed by, for example, the guide roller 42 or the belt conveyor 44.

In Modification 1 illustrated in Figs. 5 and 6, the tubular body 14 and the core material 16 are disposed such that respective axial directions of the tubular body 14 and the core material 16 are a horizontal direction, and the core material 16 is rotatably supported by the vertical cutting portion 46 near the outlet 26 of the tubular body 14. Since the tip end side (outlet 26 side) of the core material 16 is supported by the vertical cutting portion 46, it is suppressed that particularly the tip end side (outlet 26 side) of the core material 16 bends downward by its own weight. Floating of the core material 16 in the mixture 12 due to buoyancy is also suppressed. As a result, the center of the core material 16 at the outlet 26 of the tubular body 14 coincides with or approaches a desired position.

The protein processed food 30 discharged from the outlet 26 is vertically cut by the vertical cutting portion 46. As a result, as illustrated in Fig. 7, the protein processed food 30 in which the hollow structure is cut into two pieces can be continuously produced.

In an ordinary method of producing chikuwa, since firing is performed after a settling step at about 30°C, moisture evaporates in the settling step, and the final yield is about 80%. According to the present embodiment, since the settling step is not necessary and chikuwa can be heat-coagulated in the tubular body 14, evaporation of moisture can be suppressed and the yield is about 94%. The higher the yield, that is, the more moisture in the food, the lower the cost.

In normal chikuwa, in a case in which a variation in quality of the minced fish of the raw material of the mixture 12 is large, a large amount of protease is contained, and the protease acts in the settling step to decompose the protein, so that a viscoelastic texture is not obtained. Therefore, it is not possible to use the minced fish having a large variation in quality as the raw material of the chikuwa. According to the present embodiment, since chikuwa can be produced without the need for the settling step, a minced fish having a large variation in quality can also be used as the raw material of the mixture 12.

In the normal chikuwa, the temperature of the chikuwa is increased from the outside of the chikuwa in a firing step, but according to the present embodiment, the temperature is uniformly increased by internal heating and the temperature increase rate is high. Chemical bonds such as SS bonds, ionic bonds, hydrogen bonds, and hydrophobic bonds, and/or physical bonds, which are said to be involved in gel formation, may be affected by an enzyme contained in the minced fish. As the enzyme contained in the minced fish, an enzyme that inhibits gel formation by the minced fish in a specific temperature zone, such as a protease, is known. In order not to be affected by this, it may be advantageous for the temperature increasing temperature to be fast in order to allow a certain temperature zone to pass quickly. Due to the difference in the temperature rise, the chikuwa prepared by external heating and the protein processed food obtained by the present embodiment have different gel structures. The difference in gel structure can be detected by measurement of partial gel strength, observation with a microscope, sensory evaluation for evaluating texture or touch, and other methods. For example, the temperature increasing temperature of an inner layer portion is relatively slow as compared with the temperature increasing temperature of an outer layer portion in the case of the chikuwa prepared by external heating. For this reason, the inner layer portion has a softer texture than the outer layer portion, and may be perceived as uncomfortable when the chikuwa is completely chewed. According to the present embodiment, in a case in which the temperature is uniformly raised by internal heating and the temperature increase rate is increased, a difference in texture is less likely to occur between the outer layer portion and the inner layer portion, and discomfort can be prevented.

### [Second Embodiment]

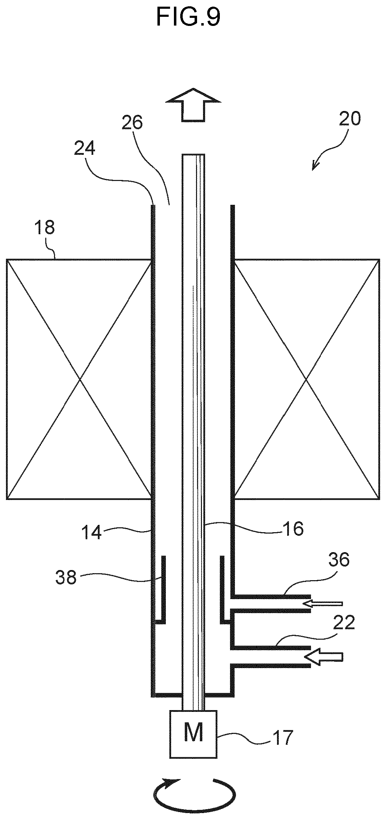

In Fig. 9, in a production device 20 for a protein processed food according to the present embodiment, the tubular body 14 and the core material 16 are disposed such that respective axial directions of the tubular body 14 and the core material 16 is a vertical direction. The vertical direction refers to a range of the vertical direction ± 10°.

As described above, in a case in which the core material 16 is disposed such that the axial direction of the core material is a vertical direction, since deflection of the core material 16 or floating of the core material 16 in the mixture 12 does not become a problem, the protein processed food 30 having heat coagulability can be continuously produced in a hollow shape even without specific gravity adjustment of the core material 16. By setting a discharge direction of the mixture 12 from the lower side to the upper side, the mixture 12 is prevented from falling in the direction of gravity and/or the steam is discharged upward at the time of internal heating of the mixture 12, so that continuous discharge of the protein processed food 30 which is hollow can be stably performed.

Since other parts are the same as those of the first embodiment, the same parts are denoted by the same reference numerals in the drawings, and the description thereof will be omitted.

(Production Method for Protein Processed Food) A production method for a protein processed food includes continuously heat-coagulating and molding a mixture 12 containing a heat-coagulating protein, a lipid, and moisture and having fluidity by an internal heating system while moving the mixture 12 in a tubular body 14, in which the tubular body has an outlet 26 for a protein processed food 30 at one end 24 and a core material 16 arranged inside the tubular body 14 and extending to at least the outlet 26 along an axial direction of the tubular body 14 are used, the mixture 12 is supplied between the tubular body 14 and the core material 16 while the core material 16 is rotated around the axial direction of the tubular body 14 and extruded toward the outlet 26, the mixture 12 is internally heated and coagulated at a side further upstream than the outlet 26, and the coagulated hollow protein processed food 30 is discharged from the outlet 26.

In the production method for a protein processed food, the mixture 12 containing a protein, a lipid, and moisture and having fluidity is supplied between the tubular body 14 and the core material 16 while the core material 16 is rotated around the axial direction of the tubular body 14, the mixture 12 is extruded toward the outlet 26, and at a side further upstream than the outlet 26, the mixture 12 is internally heated and coagulated, and the coagulated hollow protein processed food 30 is discharged from the outlet 26. Adhesion of the mixture 12 to the core material 16 is suppressed by rotating the core material 16, so that smooth extrusion can be performed. As a result, a gap is formed between an outer surface of the core material 16 and the mixture 12. A gap is also formed between an inner surface of the tubular body 14 and the mixture 12. Steam is generated at the time of internal heating of the mixture 12, but the steam is discharged to the outside of the tubular body 14 by these gaps serving as passages for the steam. Therefore, as compared with the case of producing the protein processed food 30 which is solid and does not have the core material 16, the steam can be easily dissipated, and an increase in internal pressure inside the tubular body 14 is suppressed. Therefore, continuous discharge of the protein processed food 30 which is hollow can be stably performed.

The tubular body 14 and the core material 16 may be disposed such that respective axial directions of the tubular body 14 and the core material 16 are a horizontal direction, the core material 16 may be rotatably supported at a side further upstream than the outlet 26 and is not necessarily supported at the outlet 26, and a specific gravity of the core material 16 may be equivalent to a specific gravity of the mixture 12.

As illustrated in Fig. 1, in a case in which the tubular body 14 and the core material 16 are disposed such that respective axial directions of the tubular body 14 and the core material 16 are a horizontal direction, the core material 16 is rotatably supported at a side further upstream than the outlet 26 and is not supported at the outlet 26, so that continuous discharge of the protein processed food 30 which is hollow can be performed. However, in this case, since particularly the tip end side (outlet 26 side) of the core material 16 bends downward by its own weight, it is a problem to suppress the bending of the core material.

In the production method for a protein processed food, since the specific gravity of the core material 16 is equivalent to the specific gravity of the mixture 12, deflection of the core material 16 can be suppressed, and the center of the core material 16 at the outlet 26 of the tubular body 14 can be matched with or brought close to a desired position. Therefore, the protein processed food 30 which is hollow can be produced in a desired shape.

As illustrated in Figs. 6 and 7, the tubular body 14 and the core material 16 may be disposed such that respective axial directions of the tubular body 14 and the core material 16 are a horizontal direction, a vertical cutting portion 46 rotatably supporting the core material 16 and configured to vertically cut the protein processed food 30 may be provided near the outlet 26 of the tubular body 14, and the protein processed food 30 may be heat-molded while the core material 16 is rotatably supported by the vertical cutting portion 46, and the protein processed food 30 may be vertically cut at the outlet 26.

Coloring of the outer surface of the mixture 12 may be performed. By performing the coloring of the outer surface of the mixture 12, the protein processed food 30, which is hollow, like, for example, a cuttlefish imitation can be produced.

### [Other Embodiments]

The tubular body 14 and the core material 16 can be installed at any inclination from horizontal to vertical. At this time, in a case in which the outlet 26 is installed at a position higher than the inlet 22 in the vertical direction, a back pressure is generated, and continuous discharge of the protein processed food 30 which is hollow can be stably performed.

The tubular body 14 has a cylindrical shape, but is not limited thereto, and may have a cylindrical shape such as a polygonal cross-section or an elliptical cross-section.

One core material 16 is used for the tubular body 14, but is not limited thereto, and a plurality of the core materials 16 may be used.

The tubular body 14 may be fixed, and may rotate at a speed different from that of the core material 16 in a direction opposite to or in the same direction as that of the core material 16.

The microwave heating device has been described as the internal heating device 18, but Joule heating or high frequency heating may be used as the heating means.

## Claims

1. A production method for a protein processed food (30), the production method comprising continuously heat-coagulating and molding a fluid mixture (12) containing a heat-coagulating protein, a lipid, and moisture, by an internal heating system while moving the mixture (12) in a tubular body (14),
wherein the tubular body (14) has an outlet (26) for the protein processed food (30) at one end, and a core material (16) arranged inside the tubular body (14) and extending to at least the outlet (26) along an axial direction of the tubular body (14), and
wherein the mixture (12) is supplied between the tubular body (14) and the core material (16), while the core material (16) is rotated around the axial direction of the tubular body (14), the mixture (12) is extruded toward the outlet (26), the mixture (12) is internally heated and coagulated at a side further upstream than the outlet (26), and coagulated hollow protein processed food (30) is discharged from the outlet (26).

2. The production method for a protein processed food (30) according to claim 1, wherein the tubular body (14) and the core material (16) are disposed such that respective axial directions of the tubular body (14) and the core material (16) are a horizontal direction or a vertical direction.

3. The production method for a protein processed food (30) according to claim 1, wherein:
the tubular body (14) and the core material (16) are disposed such that respective axial directions of the tubular body (14) and the core material (16) are a horizontal direction,
the core material (16) is rotatably supported at a side further upstream than the outlet (26) and is not supported at the outlet (26), and
a specific gravity of the core material (16) is equivalent to a specific gravity of the mixture (12).

4. The production method for a protein processed food (30) according to any one of claims 1 to 3, wherein:
a vertical cutting portion (46) rotatably supporting the core material (16) and configured to vertically cut the protein processed food (30) is provided near the outlet (26) of the tubular body (14), and
the protein processed food (30) is heat-molded while the core material (16) is rotatably supported by the vertical cutting portion (46), and the protein processed food (30) is vertically cut at the outlet (26).

5. The production method for a protein processed food (30) according to any one of claims 1 to 4, further comprising coloring an outer surface of the mixture (12).

6. A production device (10) for a protein processed food (30) that continuously heat-coagulates and molds a fluid mixture (12) containing a heat-coagulating protein, a lipid, and moisture, by an internal heating system while moving the mixture (12) in a tubular body (14), the production device (10) comprising:
the tubular body (14), having an inlet (22) to which the mixture (12) is supplied and an outlet (26) which is provided at one end and from which the protein processed food (30) is discharged;
a core material (16) arranged inside the tubular body (14), extending to at least the outlet (26) along an axial direction of the tubular body (14), and rotating around the axial direction; and
an internal heating device (18) provided at a position at a side further upstream than the outlet (26) of the tubular body (14),
wherein, during a process in which the mixture (12) is supplied, from the inlet (22), between the tubular body (14) and the core material (16) and is extruded toward the outlet (26), the mixture (12) is heated and coagulated by the internal heating device (18) to obtain the protein processed food (30), which is hollow.

7. The production device (10) for a protein processed food (30) according to claim 6, wherein the tubular body (14) and the core material (16) are disposed such that respective axial directions of the tubular body (14) and the core material (16) are a horizontal direction or a vertical direction.

8. The production device (10) for a protein processed food (30) according to claim 6, wherein:
the tubular body (14) and the core material (16) are disposed such that respective axial directions of the tubular body (14) and the core material (16) are a horizontal direction,
the core material (16) is rotatably supported at a side further upstream than the outlet (26) and is not supported at the outlet (26), and
a specific gravity of the core material (16) is equivalent to a specific gravity of the mixture (12).

9. The production device (10) for a protein processed food (30) according to any one of claims 6 to 8, wherein a vertical cutting portion (46) rotatably supporting the core material (16) and configured to vertically cut the protein processed food (30) is provided near the outlet (26) of the tubular body (14).

10. The production device (10) for a protein processed food (30) according to any one of claims 6 to 9, wherein the tubular body (14) has a colorant supply port (36) through which a colorant (34) for coloring an outer surface of the mixture (12) is supplied.

## Patentansprüche

1. Herstellungsverfahren für ein proteinhaltiges verarbeitetes Lebensmittel (30), wobei das Herstellungsverfahren das kontinuierliche Hitzekoagulieren und Formen eines Fluidgemischs (12), das ein bei Hitze koagulierendes Protein, ein Lipid und Feuchtigkeit enthält, durch ein internes Heizsystem umfasst, während sich das Gemisch (12) in einem röhrenförmigen Körper (14) bewegt,
wobei der röhrenförmige Körper (14) einen Auslass (26) für das proteinhaltige verarbeitete Lebensmittel (30) an einem Ende und ein Kernmaterial (16), das im röhrenförmigen Körper (14) angeordnet ist und sich entlang der Axialrichtung des röhrenförmigen Körpers (14) zumindest bis zum Auslass (26) erstreckt, aufweist und
wobei das Gemisch (12) zwischen dem röhrenförmigen Körper (14) und dem Kernmaterial (16) zugeführt wird, während das Kernmaterial (16) um die axiale Richtung des röhrenförmigen Körpers (14) rotiert wird, wobei das Gemisch (12) zum Auslass (26) hin extrudiert wird, wobei das Gemisch (12) an einer Stelle weiter stromauf als der Auslass (26) intern erhitzt und koaguliert wird und koaguliertes hohles proteinhaltiges verarbeitetes Lebensmittel (30) über den Auslass (26) ausgegeben wird.

2. Herstellungsverfahren für ein proteinhaltiges verarbeitetes Lebensmittel (30) nach Anspruch 1, wobei der röhrenförmige Körper (14) und das Kernmaterial (16) so angeordnet sind, dass die entsprechenden axialen Richtungen des röhrenförmigen Körpers (14) und des Kernmaterials (16) eine horizontale Richtung oder eine vertikale Richtung sind.

3. Herstellungsverfahren für ein proteinhaltiges verarbeitetes Lebensmittel (30) nach Anspruch 1, wobei:
der röhrenförmige Körper (14) und das Kernmaterial (16) so angeordnet sind, dass die entsprechenden axialen Richtungen des röhrenförmigen Körpers (14) und des Kernmaterials (16) eine horizontale Richtung sind,
das Kernmaterial (16) rotierbar auf einer Seite weiter stromauf als der Auslass (26) getragen wird und nicht am Auslass (26) getragen wird und
die Dichte des Kernmaterials (16) gleich der Dichte des Gemischs (12) ist.

4. Herstellungsverfahren für ein proteinhaltiges verarbeitetes Lebensmittel (30) nach einem der Ansprüche 1 bis 3, wobei:
ein vertikaler Schneideabschnitt (46), der das Kernmaterial (16) rotierbar trägt und ausgelegt ist, das proteinhaltige verarbeitete Lebensmittel (30) vertikal zu schneiden, nahe dem Auslass (26) des röhrenförmigen Körpers (14) bereitgestellt ist,
das proteinhaltige verarbeitete Lebensmittel (30) wärmegeformt wird, während das Kernmaterial (16) rotierbar durch den vertikalen Schneideabschnitt (46) gestützt wird, und das proteinhaltige verarbeitete Lebensmittel (30) am Auslass (26) vertikal geschnitten wird.

5. Herstellungsverfahren für ein proteinhaltiges verarbeitetes Lebensmittel (30) nach einem der Ansprüche 1 bis 4, das weiters das Färben einer äußeren Oberfläche des Gemischs (12) umfasst.

6. Herstellungsvorrichtung (10) für ein proteinhaltiges verarbeitetes Lebensmittel (30), das ein Fluidgemisch (12), das ein bei Hitze koagulierendes Protein, ein Lipid und Feuchtigkeit enthält, kontinuierlich durch ein internes Heizsystem hitzekoaguliert und formt, während sich das Gemisch (12) in einem röhrenförmigen Körper (14) bewegt, wobei die Herstellungsvorrichtung (10) Folgendes umfasst:
den röhrenförmigen Körper (14), der einen Einlass (22), in den das Gemisch (12) zugeführt wird, und einen Auslass (26), der an einem Ende bereitgestellt ist und aus dem das proteinhaltige verarbeitete Lebensmittel (30) ausgegeben wird, aufweist;
ein Kernmaterial (16), das im röhrenförmigen Körper (14) angeordnet ist, sich entlang der axialen Richtung des röhrenförmigen Körpers (14) zumindest bis zum Auslass (26) erstreckt und um die axiale Richtung rotiert; und
eine interne Heizvorrichtung (18), die an einer Position auf einer Seite weiter stromauf als der Auslass (26) des röhrenförmigen Körpers (14) bereitgestellt ist,
wobei während eines Prozesses, bei dem das Gemisch (12) vom Einlass (22) zwischen dem röhrenförmigen Körper (14) und dem Kernmaterial (16) zugeführt wird und zum Auslass (26) hin extrudiert wird, das Gemisch (12) durch die interne Heizvorrichtung (18) erhitzt und koaguliert wird, um das proteinhaltige verarbeitete Lebensmittel (30) zu erhalten, das hohl ist.

7. Herstellungsvorrichtung (10) für ein proteinhaltiges verarbeitetes Lebensmittel (30) nach Anspruch 6, wobei der röhrenförmige Körper (14) und das Kernmaterial (16) so angeordnet sind, dass die entsprechenden axialen Richtungen des röhrenförmigen Körpers (14) und des Kernmaterials (16) eine horizontale Richtung oder eine vertikale Richtung sind.

8. Herstellungsvorrichtung (10) für ein proteinhaltiges verarbeitetes Lebensmittel (30) nach Anspruch 6, wobei:
der röhrenförmige Körper (14) und das Kernmaterial (16) so angeordnet sind, dass die entsprechenden axialen Richtungen des röhrenförmigen Körpers (14) und des Kernmaterials (16) eine horizontale Richtung sind,
das Kernmaterial (16) rotierbar auf einer Seite weiter stromauf als der Auslass (26) getragen wird und nicht am Auslass (26) getragen wird und
die Dichte des Kernmaterials (16) gleich der Dichte des Gemischs (12) ist.

9. Herstellungsvorrichtung (10) für ein proteinhaltiges verarbeitetes Lebensmittel (30) nach einem der Ansprüche 6 bis 8, wobei ein vertikaler Schneideabschnitt (46), der das Kernmaterial (16) rotierbar trägt und ausgelegt ist, das proteinhaltige verarbeitete Lebensmittel (30) vertikal zu schneiden, nahe dem Auslass (26) des röhrenförmigen Körpers (14) bereitgestellt ist.

10. Herstellungsvorrichtung (10) für ein proteinhaltiges verarbeitetes Lebensmittel (30) nach einem der Ansprüche 6 bis 9, wobei der röhrenförmige Körper (14) eine Farbstoffzuführöffnung (36) aufweist, durch die ein Farbstoff (34) zum Färben einer äußeren Oberfläche des Gemischs (12) zugeführt wird.

## Revendications

1. Procédé de production d'un aliment transformé protéiné (30), le procédé de production comprenant la coagulation par la chaleur et le moulage en continu d'un mélange fluide (12) contenant une protéine de coagulation par la chaleur, un lipide et de l'humidité, par l'intermédiaire d'un système de chauffage interne tout en déplaçant le mélange (12) dans un corps tubulaire (14),
dans lequel le corps tubulaire (14) présente une sortie (26) pour les aliments transformés protéinés (30) à une extrémité, et un matériau de partie centrale (16) agencé à l'intérieur du corps tubulaire (14) et s'étendant au moins jusqu'à la sortie (26) le long d'une direction axiale du corps tubulaire (14), et
dans lequel le mélange (12) est fourni entre le corps tubulaire (14) et le matériau de partie centrale (16), tandis que le matériau de partie centrale (16) est mis en rotation autour de la direction axiale du corps tubulaire (14), le mélange (12) est extrudé vers la sortie (26), le mélange (12) est chauffé en interne et coagulé au niveau d'un côté plus en amont que la sortie (26), et les aliments transformés protéinés (30) creux et coagulés sont évacués hors de la sortie (26).

2. Procédé de production d'un aliment transformé protéiné (30) selon la revendication 1, dans lequel le corps tubulaire (14) et le matériau de partie centrale (16) sont disposés de telle sorte que les directions axiales respectives du corps tubulaire (14) et du matériau de partie centrale (16) sont une direction horizontale ou une direction verticale.

3. Procédé de production d'un aliment transformé protéiné (30) selon la revendication 1, dans lequel :
le corps tubulaire (14) et le matériau de partie centrale (16) sont disposés de telle sorte que les directions axiales respectives du corps tubulaire (14) et du matériau de partie centrale (16) soient une direction horizontale,
le matériau de partie centrale (16) est supporté de manière rotative sur un côté plus en amont que la sortie (26) et n'est pas supporté au niveau de la sortie (26), et
une densité spécifique du matériau de partie centrale (16) est équivalente à une densité du mélange (12).

4. Procédé de production d'un aliment transformé protéiné (30) selon l'une quelconque des revendications 1 à 3, dans lequel :
une partie de coupe verticale (46) supportant de manière rotative le matériau de partie centrale (16) et configurée pour couper verticalement les aliments transformés protéinés (30) est prévue près de la sortie (26) du corps tubulaire (14), et
l'aliment transformé protéiné (30) est moulé à chaud tandis que le matériau de partie centrale (16) est supporté de manière rotative par la partie de coupe verticale (46), et l'aliment transformé protéiné (30) est coupé verticalement au niveau de la sortie (26).

5. Procédé de production d'un aliment transformé protéiné (30) selon l'une quelconque des revendications 1 à 4, comprenant en outre la coloration d'une surface externe du mélange (12).

6. Dispositif de production (10) pour un aliment transformé protéiné (30) qui coagule à chaud et moule en continu un mélange fluide (12) contenant une protéine coagulant à la chaleur, un lipide et de l'humidité, par l'intermédiaire d'un système de chauffage interne tout en déplaçant le mélange (12) dans un corps tubulaire (14), le dispositif de production (10) comprenant :
le corps tubulaire (14), présentant une entrée (22) à laquelle le mélange (12) est fourni et une sortie (26) qui est prévue à une extrémité et à partir de laquelle l'aliment transformé protéiné (30) est évacué ;
un matériau de partie centrale (16) agencé à l'intérieur du corps tubulaire (14), s'étendant au moins jusqu'à la sortie (26) le long d'une direction axiale du corps tubulaire (14), et tournant autour de la direction axiale ; et
un dispositif de chauffage interne (18) prévu dans une position au niveau d'un côté plus en amont que la sortie (26) du corps tubulaire (14),
dans lequel, au cours d'un processus dans lequel le mélange (12) est fourni, à partir de l'entrée (22), entre le corps tubulaire (14) et le matériau de partie centrale (16) et est extrudé vers la sortie (26), le mélange (12) est chauffé et coagulé par l'intermédiaire du dispositif de chauffage interne (18) pour obtenir l'aliment transformé protéiné (30), qui est creux.

7. Dispositif de production (10) pour un aliment transformé protéiné (30) selon la revendication 6, dans lequel le corps tubulaire (14) et le matériau de partie centrale (16) sont disposés de telle sorte que les directions axiales respectives du corps tubulaire (14) et du matériau de partie centrale (16) sont une direction horizontale ou une direction verticale.

8. Dispositif de production (10) pour un aliment transformé protéiné (30) selon la revendication 6, dans lequel :
le corps tubulaire (14) et le matériau de partie centrale (16) sont disposés de telle sorte que les directions axiales respectives du corps tubulaire (14) et du matériau de partie centrale (16) soient une direction horizontale,
le matériau de partie centrale (16) est supporté de manière rotative sur un côté plus en amont que la sortie (26) et n'est pas supporté au niveau de la sortie (26), et
une densité spécifique du matériau de partie centrale (16) est équivalente à une densité du mélange (12).

9. Dispositif de production (10) pour un aliment transformé protéiné (30) selon l'une quelconque des revendications 6 à 8, dans lequel une partie de coupe verticale (46) supportant de manière rotative le matériau de partie centrale (16) et configurée pour couper verticalement l'aliment transformé protéiné (30) est prévue près de la sortie (26) du corps tubulaire (14).

10. Dispositif de production (10) pour un aliment transformé protéiné (30) selon l'une quelconque des revendications 6 à 9, dans lequel le corps tubulaire (14) présente un orifice d'alimentation en colorant (36) à travers lequel un colorant (34) pour colorer une surface extérieure du mélange (12) est fourni.
